**Europäisches Patentamt**

**European Patent Office**

**Office européen des brevets**

(11) Veröffentlichungsnummer : **0 479 766 A2**

(12) # EUROPÄISCHE PATENTANMELDUNG

(21) Anmeldenummer : **91890229.7**

(51) Int. Cl.⁵ : **G01B 5/00**

(22) Anmeldetag : **30.09.91**

(30) Priorität : **02.10.90 AT 1981/90**

(43) Veröffentlichungstag der Anmeldung :
**08.04.92 Patentblatt 92/15**

(84) Benannte Vertragsstaaten :
**BE CH DE FR GB IT LI LU NL SE**

(71) Anmelder : **RSF-Elektronik Gesellschaft m.b.H.
A-5121 Tarsdorf 93 (AT)**

(72) Erfinder : **Rieder, Heinz
Maria Bühelstrasse 23
A-5110 Oberndorf (AT)**
Erfinder : **Schwaiger, Max
Weilhartstrasse 13
A-5121 Ostermiething (AT)**

(74) Vertreter : **Hübscher, Heiner, Dipl.-Ing. et al
Spittelwiese 7
A-4020 Linz (AT)**

(54) **Längenmesssystem.**

(57)   Ein Längenmeßsystem besitzt einen Maßstab und eine relativ zu ihm über seine Länge verstellbaren Abtasteinheit (4), wobei der Maßstabkörper in einem zugleich ein rohrförmiges Schutzgehäuse für Maßstab und Abtasteinheit bildenden Maßstabträger (1) über eine eine relative Längsverstellung zulassende, insbesondere elastische Verbindung befestigt, der Maßstabträger (1) im Bereich der Enden und im Mittelbereich mit Befestigungselementen (2, 6, 13) zur Anbringung an einem Objekt, z. B. am Bett einer Maschine versehen ist und Längenausgleichselemente (7) zum Ausgleich unterschiedlicher Wärmedehnungen von Objekt und Maßstabträger vorgesehen sind. Zur Vereinfachung der Gesamtkonstruktion und zur Erzielung eines einwandfreien Ausgleiches der unterschiedlichen Wärmedehnungsverhalten von Maßstabträger (1) und Objekt enthält der Maßstabträger (1) selbst ausschließlich im Bereich seines mittleren Befestigungselementes (6) wenigstens ein aus dem Maßstabträgerkörper gebildetes oder eingesetztes Längenausgleichselement (7).

EP 0 479 766 A2

FIG.1

Die Erfindung betrifft ein Längenmeßsystem nach dem Oberbegriff des Patentanspruches 1.

Ein derartiges Längenmeßsystem ist aus der EP-B-0 110 059 bekannt. Durch die beschriebene grundsätzliche Ausbildung soll erreicht werden, daß bei am Objekt befestigtem Längenmeßsystem keine bzw. nur eine vernachlässigbar kleine Verlagerung des meist im Mittelbereich vorgesehenen Maßstabbezugspunktes gegenüber einem zugeordneten Bezugspunkt des Objektes, z. B. dem Meß-Nullpunkt einer Werkzeugmaschine, auftritt. Bei den bekannten Längenmeßsystem wird die z. B. aus der DE-A-26 43 304 bekannte Konstruktion der Befestigung des meist aus Glas bestehenden Maßstabkörpers an dem z. B. aus Aluminium hergestellten Maßstabträger mittels eines Klebemittels hoher Elastizität ausgenützt, wobei im Mittelbereich eine Fixierung des Maßstabkörpers am Träger durch ein Klebemittel geringer Elastzität vorgenommen werden kann. Als Längenausgleichselemente werden an beiden Enden des Maßstabkörpers aus der DE-A-28 53 771 und der EP-A-0 110 059 bekannte, mit Längenausgleichselementen kombinierte Befestigungselemente verwendet, die eine Längsverstellung der Enden des Maßstabträgers gegenüber der Befestigungsstelle des Befestigungselementes zulassen und z. B. durch mäanderförmige, von oben und unten geführte Einschnitte in dem zum Maßstabträger weisenden Bereich eines Befestigungsblockes eines Befestigungselementes gebildet sind. Andere Möglichkeiten der Ausbildung der wieder ausschließlich an Endbefestigungselementen ausgebildeten Längenausgleichselemente sind Federelemente, Federgelenke, miteinander verbundene L-förmige Winkel und die Verbindung zwischen Maßstabträger und Befestigungsblock herstellende Drehgelenke mit senkrecht zur Längsrichtung des Maßstabträgers verlaufenden Drehachsen. Durch die verschiebbare Ausführung ergibt sich eine aufwendige und zum Teil unstabile Gesamtkonstruktion der Endbefestigungselemente, wegen der Unterbringung der Ausgleichselemente in diesen Endbefestigungselementen eine manchmal entscheidend nachteilige Vergrößerung der Gesamtbaulänge und ein ungünstiges Bewegungsverhalten bei der Erwärmung, wobei sich bei dem meist schneller als die Abkühlung erfolgenden Temperaturanstieg die sich stärker als das Objekt dienenden Teile des Maßstabträgers vom mittleren Null- oder Bezugspunkt auseinanderbewegen. Bei unebenen Maschinenauflagen und nicht exakt aufeinander abgestimmten Bereichen für die Endbefestigungselemente und das Mittelbefestigungselement können die auftretenden Befestigungsspannungen die Funktion der Ausgleichselemente beeinträchtigen.

Aus der AT-A-377 083 ist es bekannt, bei größeren Maßstablängen zwei oder mehrere Maßstabträger-Teilstücke aneinanderzureihen, wobei diese Teilstücke Führungsnuten für ein über die Gesamtlänge des Meßsystems gespanntes Maßstabband aufweisen und das Maßstabband an einem Ende festgelegt und über eine Spannvorrichtung am anderen Ende unter bleibender Vorspannung gehalten wird. Die Maßstträger-Teilstücke werden unter Zwischenschaltung elastischer z. B. gummielastischer Dichtungselemente aneinandergereiht, wobei bei der Montage jedes Teilstück für sich montiert und ausgerichtet werden muß. Unterschiedliche Wärmedehnungen von Objekt und Maßstabträgerteilstücken werden über die zwischengeschalteten Dichtungen aufgenommen. Die getrennte Montage der einzelnen Teilstücke des Maßstabträgers ist äußerst aufwendig, kompliziert und fehlerbehaftet. Überdies ist es bei dieser Ausführung wegen der notwendigen Vorspannung des Maßstabbandes über an seinen Enden angreifende Spannmittel unmöglich einen im Mittelbereich vorzusehenden Bezugspunkt von Objekt und Maßstab relativ zueinander zu fixieren.

Aufgabe der Erfindung ist es, ein Längenmeßsystem nach dem Oberbegriff des Patentanspruches 1 anzugeben, das bei einfacherem Aufbau die sichere Einhaltung einer Nullage des Maßstabes auch bei unterschiedlichen Wärmedehnungen von Maßstabträger und Objekt sicher gewährleistet und das das unterschiedliche Wärmedehnungsverhalten von Objekt, Maßstab und Maßstabträger unter einer Erzielung einer höheren Genauigkeit besser kompensiert.

Die gestellte Aufgabe wird durch die Merkmale des Patentanspruches 1 gelöst.

Es können herkömmliche Endabschlüsse, die gegebenenfalls mit Lagerblöcken kombiniert sind, für die Enden des Maßstabträgerkörpers Verwendung finden und man kann auch zur zusätzlichen Längsabstützung und zur Fixierung des Mittelbereiches des Maßstabes, wo dies an sich bei längeren Maßstäben üblich ist, ein normales Befestigungselement anbringen. Eine relative Verlängerung des Maßstabträgerkörpers infolge der Wärmedehnung kann sich in einer selbstverständlich entsprechend kleinen Längsbewegung des jeweiligen Trägerteilbereiches auf die Mitte zu auswirken, so daß eher das Bestreben besteht, den Maßstabkörper über die elastische Verbindung und deren allfällige Reibung auf Druck zu belasten, wogegen die geringe Zugbelastung bei der Abkühlung des Maßstabträgerkörpers im Normalfall nur sehr langsam zur Wirkung kommt.

Nach einer Möglichkeit kann man eine geringe Längsverstellbarkeit des Maßstabträgers innerhalb des mittleren Befestigungselementes vorsehen. Eine vorteilhafte Ausbildung erscheint derzeit aber jene nach dem Anspruch 2.

Bei einer Ausführung nach Anspruch 3 geht man davon aus, daß Längenänderungen des Maßstabträgers im Befestigungsbereich am Befestigungselement so gering sind, daß innerhalb des Angriffsbereiches des Befestigungselementes keine tatsächlich störenden Kräfte auftreten können.

Bei einer Ausführung gemäß Anspruch 4 werden Relativverstellungen der zusammenwirkenden Bauteile im Bereich der Referenzmarke und damit des Bezugspunktes des Maßstabes verhindert. Unter dem "mittleren" Anbringungsort ist hier jeweils die Anbringungsstelle der Referenzmarke bzw. des Maschinenbezugspunktes, in manchen Fällen also nicht exakt die Maßstabmitte zu verstehen.

Eine mögliche Ausgestaltung zur Bildung des bzw. der Längenausgleichselemente entnimmt man dem Anspruch 5. Wesentlich ist hier, daß es möglich ist, solche Schwachstellen ohne ungünstige Herabsetzung der Biegesteifigkeit vorzusehen, so daß durch diese Schwachstellen keine Gefahr einer Verbiegung des Trägerkörpers bedingt wird, wobei überdies der Maßstabträgerkörper an oder in der Nähe der Schwachstellen ohnehin durch die Mittelbefestigung gehalten wird.

Eine weitere vorteilhafte Ausbildung der Schwachstellen ist in Anspruch 6 angegeben. Es wird in allen Fällen danach getrachtet, die Schwachstellen so auszubilden, daß sie nur eine Verlagerung in Längsrichtung des Trägerkörpers, aber keine Verstellung im Sinne einer Abknickung oder Verbiegung des Maßstabträgerkörpers zulassen.

Weitere Einzelheiten und Vorteile des Erfindungsgegenstandes entnimmt man der nachfolgenden Zeichnungsbeschreibung.

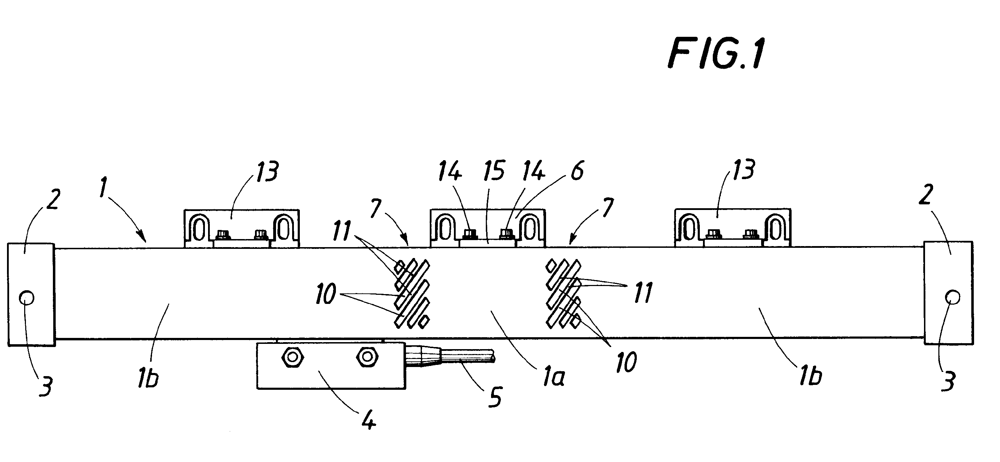

In den Fig. 1 bis 3 der Zeichnung sind drei verschiedene Ausführungsformen eines erfindungsgemäßen Längenmeßsystems jeweils in Ansicht dargestellt.

In den Fig. der Zeichnung wurden jeweils gleiche Teile mit gleichen Bezugszeichen versehen. Für das Längenmeßsystem ist ein ein rohrförmiges Schutzgehäuse für einen vorzugsweise aus Glas hergestellten mit einer Meßteilung versehenen Maßstabkörper bildender Maßstabträger 1 vorgesehen, der in seinem Inneren, wie bekannt, vorzugsweise im oberen Teil zu einem stärkeren Trägerteil ausgebildet ist und in diesem eine Nut aufweist, in die der eine Randbereich des Maßstabkörpers mit Spiel eingreift, wobei zwischen Maßstabkörper und Nutwandung elastische Verbindungsmittel angebracht sind, die eine an sich notwendigerweise nur geringfügige Längsverstellung von Maßstabkörper und Maßstabträger 1 zulassen. In die Enden des rohrförmigen Maßstabkörpers greifen abgesetzte Endteile von Endlagerböcken 2 ein, wobei diese Verbindung abgedichtet sein kann. In den Lagerböcken 2 sind Bohrungen 3 für die Aufnahme von Befestigungsschrauben zur starren, d. h. in Längsrichtung unverschiebbaren Befestigung des Maßstabträgers 1 an einem Objekt vorgesehen.

Entlang des Maßstabkörpers ist eine z. B. optoelektronische, mit Beleuchtungseinrichtungen, Abtastgittern und photoelektrischen Empfängern ausgestattete Abtasteinheit längsverstellbar geführt, die bei der Ausbildung des Maßstabes als Inkrementalmaßstab bei der Längsverstellung unter Abtastung der Meßteilung analoge Abtastsignale erzeugt, die in digitale Zählsignale umgewandelt werden können, so daß durch verstellrichtungsabhängiges Zählen von einer gegebenen oder vorhandenen Bezugsstelle aus die jeweilige Messung erfolgt. Zusätzlich zur Meßteilung können eine oder mehrere Bezugsmarken zur Erzeugung von Bezugssignalen vorgesehen sein, wobei die Messung auf eines dieser Bezugssignale bezogen werden kan.

Falls ein Absolutmaßstab Verwendung findet, kann ebenfalls eine optoelektronische Abtastung des dann meist als codierter Maßstab ausgebildeten Maßstabes vorgenommen werden, wobei die Meßsignale jeweils direkt die Absolutposition der Abtasteinheit gegenüber dem Maßstab angeben. Neben optoelektronischen Abtasteinheiten können bei entsprechender Maßstabausbildung auch nach kapazitiven oder induktiven Abtastprinzipien arbeitende Abtasteinheiten Verwendung finden. Von der Abtasteinheit wird meist über ein Schwert durch einen Schlitz des Maßstabträgers 1 hindurch, der mit Dichtlippen ausgestattet sein kann, eine Verbindung mit einem äußeren Mitnehmer 4 hergestellt, von dem über Leitungen 5 die Meß- oder Zählsignale zu einer Auswertungseinheit geleitet werden. In der bisher beschriebenen Ausführung ist das Längenmeßsystem bekannt.

Der Maßstabträger 1 ist in seinem Mittelbereich über ein Befestigungselement 6 zusätzlich am Objekt, d. h. im Normalfall an einer Werkzeugmaschine starr befestigt. In diesem Mittelbereich oder links und rechts des Befestigungselementes 6 sind bei allen drei Ausführungsformen Längenausgleichselemente 7, 8 bzw. 9 vorgesehen, die einen Ausgleich einer gegenüber dem Objekt unterschiedlichen Wärmedehnung des Maßstabträgers 1 ermöglichen. Alle diese Längenausgleichselemente lassen eine Längsverschiebung der beidseits des Mittelteiles 1a vorhandenen bis zu den Enden reichenden Teilstücke 1b des Maßstabträgerkörpers 1 zu.

Bei der Ausführungsform nach Fig. 1 sind die Längenausgleichselemente 7 dadurch gebildet, daß im Mantel und auch im oberen Teil des den Maßstabträger 1 bildenden Rohrprofiles der besseren Übersichtlichkeit halber schwarz eingezeichnete nutenförmige, parallele Schrägvertiefungen 10 angebracht werden, zwischen denen nur dünne Stege 11 freibleiben, wobei aber diese Schrägvertiefungen nicht ganz bis ins Innere des Rohres reichen, so daß die Innenprofilform des Rohres erhalten bleibt und das Rohr dicht ist. Durch die gezeigte Anordnung wirken die Stege 11 ähnlich wie die Materialstege bei einem sogenannten Streckmetall, der Rohrträger erhält in ihrem Bereich eine wesentlich herabgesetzte Längssteifigkeit, wobei aber die Formhaltigkeit erhalten bleibt. Damit ist der geforderte Längenausgleich ohne seitliche Verlagerung der einzelnen Rohrträgerabschnitte gegeneinander möglich. Die Vertiefungen 10 können mit einem elastischen Kitt oder einem sonstigen elastischen Material ausgefüllt werden.

**4**

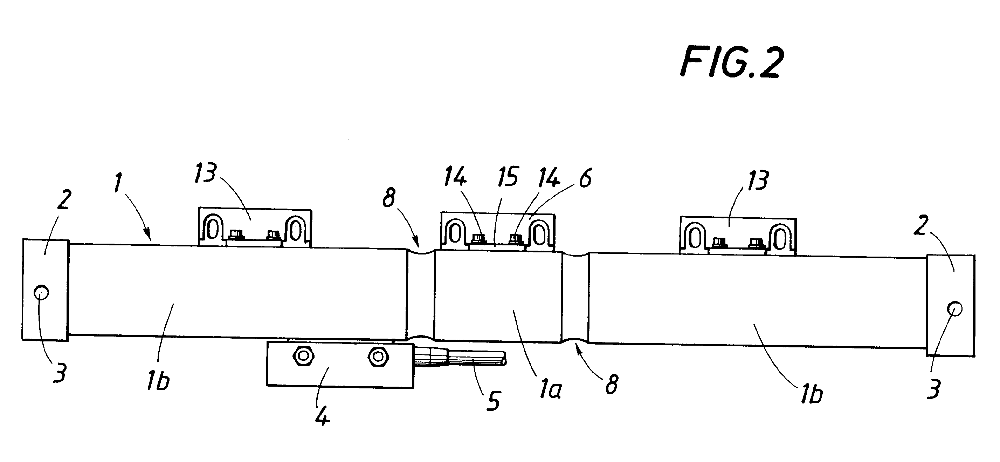

Bei der Ausführung nach Fig. 2 sind die Längenausgleichselemente 8 als zwischen Teilstücke 1a, 1b des Maßstabträgers 1 eingesetzte Dehnungselemente 8 ausgebildet. Eine ebenfalls mögliche Variante besteht darin, als Längenausgleichselemente 8 umlaufende, aber nicht in den Rohrinnenraum hineinreichende Ringnuten vorzusehen und diese mit einem elastischen Material auszufüllen.

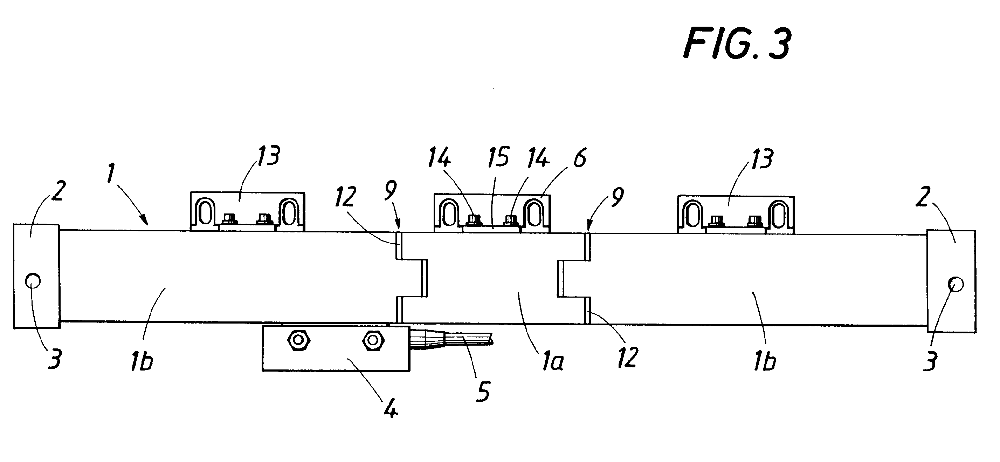

Zur Bildung der Längenausgleichselemente 9 nach Fig. 3 sind in den Rohrkörper 1 des Trägers in der dargestellten Form Nuten bis knapp zur Innenfläche des Profiles eingeschnitten und diese Nuten 12 können mit einem elastisch nachgiebigen Material, wie einem Kitt oder Silikonmasse ausgefüllt werden. Es wäre hier auch wieder eine völlige Abtrennung der Teilstücke 1a, 1b entlang den vor- und zurückgeführten, dann Schnittlininen bildenden Umrißlinien der Nuten 12 vorzusehen und die Ränder im Unterteilungsbereich stufenweise einander überlappend mit entsprechenden Gegenausnehmungen im anderen Teil vorzusehen, so daß nur eine Längsverstellung, aber keine seitliche Verstellung der Teile 1a, 1b gegeneinander möglich ist.

Wie in den Fig. 1 bis 3 der Zeichnung veranschaulicht wurde, können bei längeren Längenmeßsystemen zusätzlich zu den Befestigungsstellen 3 an den Blöcken 2 dem Befestigungselement 6 entsprechende Befestigungselemente 13 zur Befestigung des Trägerkörpers 1 am Objekt vorgesehen werden. Nach einer Variante ist es sogar möglich, diese Befestigungselemente 13 als feste Halterungsstellen für den Maßstabträger 1 vorzusehen und die Schrauben 3 wegzulassen, wobei dann zwischen den Befestigungselementen 13 und dem Befestigungselement 6 ein Längenausgleich über die Längenausgleichselemente 7, 8, 9 stattfindet und die über die Elemente 13 hinausragenden Maßstabträgerenden sich frei in Längsrichtung dehnen können. Bei allen Ausführungsvarianten wird erreicht, daß der Maßstabkörper, selbst wenn er nicht durch besondere Mittel festgelegt wird, im Mittelbereich, also im Bereich des Befestigungselementes 6, bei auftretenden, von den Längenausgleichselementen 7, 8 bzw. 9 aufgenommenen Wärmedehnungen der äußeren Trägerteilstücke 1b keine Verlagerung gegenüber dem Objekt erfährt.

Bei allen drei Ausführungsformen ist es auch möglich, jeweils nur eines der dargestellten Längenausgleichselemente 7, 8 bzw. 9 in der Längsmitte des Trägerkörpers 1 anzuordnen, der dann nur über das Längenausgleichselement miteinander verbundene Teilstücke (1b) aufweist. Dabei wird eine dem Befestigungselement 6 entsprechende Befestigung vorgesehen, bei der aber die beiden Befestigungsschrauben 14, die das Element 6 mit dem Maßstabträgerkörper 1 verbinden zu beiden Seiten des Längenausgleichselementes 7, 8 bzw. 9 angreifen, wobei im Halteflansch 15 zwischen diesen beiden Befestigungsschrauben ein Längenausgleichselement vorgesehen ist, das im einfachsten Fall durch einen quer zur Maßstablängsrichtung verlaufenden Schlitz realisiert werden kann. Hier können aber selbstverständlich verschiedenste Dehnoder Ausgleichselemente eingesetzt werden.

**Patentansprüche**

1. Längenmeßsystem mit einem Maßstab und einer relativ zu ihm über seine Länge verstellbaren Abtasteinheit (4), wobei der Maßstabkörper in einem zugleich ein rohrförmiges Schutzgehäuse für Maßstab und Abtasteinheit bildenden Maßstabträger (1) über eine eine relative Längsverstellung zulassende, insbesondere elastische Verbindung befestigt, der Maßstabträger (1) im Bereich der Enden und im Mittelbereich mit Befestigungselementen (2, 6, 13) zur Anbringung an einem Objekt, z. B. am Bett einer Maschine versehen ist und Längenausgleichselemente (7, 8, 9) zum Ausgleich unterschiedlicher Wärmedehnungen von Objekt und Maßstabträger vorgesehen sind, dadurch gekennzeichnet, daß der Maßstabträger (1) selbst ausschließlich im Bereich seines mittleren Befestigungselementes (6) wenigstens ein aus dem Maßstabträgerkörper gebildetes oder eingesetztes Längenausgleichselement (7, 8, 9) enthält.

2. Längenmeßsystem nach Anspruch 1, dadurch gekennzeichnet, daß das mittlere Befestigungselement (6) des Maßstabträgers (1) beidseits eines mittleren Längenausgleichselementes am Maßstabträger (1) angreifende Befestigungen aufweist und zwischen diesen selbst ein Längenausgleichselement bildet.

3. Längenmeßsystem nach Anspruch 1, dadurch gekennzeichnet, daß beidseits des mittleren Befestigungselementes (6) für den Maßstabträger (1) Längenausgleichselemente (7, 8, 9) vorgesehen sind.

4. Längenmeßsystem nach den Ansprüchen 1 und 3, dadurch gekennzeichnet, daß das mittlere Befestigungselement (6) bei einem mit einem Inkrementalmaßstab ausgestatteten Längenmeßsystem in Zuordnung zu einer am Inkrementalmaßstab vorgesehenen Referenzmarke angebracht ist.

5. Längenmeßsystem nach einem der Ansprüche 1 bis 4, dadurch gekennzeichnet, daß zur Bildung des bzw. der Längenausgleichselemente (7, 8, 9) im Maßstabträgerkörper (1) eine Herabsetzung der Längssteifigkeit erzeugende Schwachstellen (10, 11, 12) vorgesehen und diese Schwachstellen gegebenenfalls mit elastisch nachgiebigem Material (8) ausgefüllt sind.

6. Längenmeßsystem nach Anspruch 5, dadurch gekennzeichnet, daß die Schwachstellen (10, 11) in Form von ähnlich wie die Einschnitte bei der Bildung eines Streckmetalles angeordneten, schräg zur Längsrichtung verlaufenden Mantelvertiefungen, z. B. Nuten oder Einschnitten des Maßstabträgerkörpers (1) vorgesehen sind.

FIG.1

FIG.2

EP 0 479 766 A2

FIG. 3

EP 0 479 766 A2